(19) Europäisches Patentamt

European Patent Office

Office européen des brevets

(11) **EP 1 645 187 A1**

(12) **EUROPEAN PATENT APPLICATION**
published in accordance with Art. 158(3) EPC

(43) Date of publication:
**12.04.2006 Bulletin 2006/15**

(51) Int Cl.:
**A01N 37/02** (1985.01)     **A01N 37/06** (1985.01)

(21) Application number: **04747270.9**

(22) Date of filing: **09.07.2004**

(86) International application number:
**PCT/JP2004/009802**

(87) International publication number:
**WO 2005/004602 (20.01.2005 Gazette 2005/03)**

(84) Designated Contracting States:
**ES GR IT TR**

(30) Priority: **10.07.2003 JP 2003194837**

(71) Applicant: **RIKEN**
**Wako-shi,**
**Saitama 351-0198 (JP)**

(72) Inventor: **ARIMOTO, Yutaka**
**3510198 (JP)**

(74) Representative: **Vossius & Partner**
**Siebertstrasse 4**
**81675 München (DE)**

(54) **INSECTICIDAL OVICIDAL COMPOSITION**

(57)     The present invention herein provides an insecticidal and ovicidal composition which comprises, as an effective component, at least one member selected from the group consisting of coconut oil, palm kernel oil, triglycerides of saturated fatty acids each having 10, 12 or 14 carbon atoms, and triglycerides comprising, as the constituent fatty acids components, at least two kinds of fatty acids, or at least a saturated fatty acid having 10, 12 or 14 carbon atoms and an unsaturated fatty acid having 18 carbon atoms, as well as a method for killing or stamping out noxious insects or eggs thereof which comprises the step of spraying farm products with the foregoing insecticidal and ovicidal composition in an amount ranging from 0.2 kg/10 Ares to 8 kg/10 Ares.

EP 1 645 187 A1

**Description**

Technical Field

The present invention relates to an insecticidal and ovicidal composition and a method for killing or stamping out insects and eggs thereof.

Background Art

There have been known various kinds of insecticidal compositions for killing or stamping out noxious insects for agricultural products such as ticks (mites) and plant lice. For instance, the following Patent Document 1 discloses a germicidal composition comprising a phospholipid and an edible oil. However, this document does not disclose the simultaneous use of an edible oil and coconut oil. In addition, the following Patent Document 2 discloses a miticide which comprises animal's and/or plant's oil and a surfactant. However, the document does not disclose whether or not the composition shows an effect of stamping out the eggs of ticks. The following Patent Document 3 discloses an insecticidal and germicidal composition comprising a middle chain fatty acid triglyceride having 8 to 10 carbon atoms and a surfactant. The following Patent Document 4 discloses an insecticidal composition which comprises a middle chain fatty acid triglyceride and the toxin produced by Bacillus thuringiensis. Furthermore, the following Patent Document 5 discloses an insecticidal and miticidal composition comprising a diglycerin monooleate.

However, these conventional insecticidal compositions are ones developed for killing or stamping out mainly imagines and larvae of noxious insects, but they cannot reduce or inhibit the ability of the eggs of noxious insects to undergo hatching. For this reason, the eggs of noxious insects, which have already been deposited on or blown into crops or soil, would still remain the ability to undergo hatching even when such an insecticidal composition is applied to crops or soil to thus stamp out or exterminate the imagines and larvae thereof. As a result, these eggs hatch into larvae thereof and then grow into imagines, in due course of time. Accordingly, the insecticidal composition had to be again applied.

Patent Document 1: JP-A-53-47532
Patent Document 2: JP-A-56-140911 1
Patent Document 3: JP-A-11-29411
Patent Document 4: JP-A-2001-G4103
Patent Document 5: JP-A-10-251104

Disclosure of the Invention

Accordingly, it is an object of the present invention to provide an insecticidal and ovicidal composition which can show not only an effect of killing or stamping out noxious insects which are harmful to agricultural products, but also an effect of likewise killing or stamping out eggs thereof.

It is a further object of the present invention to provide a method for killing or stamping out insects and eggs thereof which are harmful to agricultural products.

According to the present invention, there are thus provided the following insecticidal and ovicidal composition and the following method for killing or stamping out insects and eggs thereof:

1. An insecticidal and ovicidal composition comprising, as an effective component, at least one member selected from the group consisting of coconut oil and palm kernel oil.

2. An insecticidal and ovicidal composition comprising, as an effective component, at least one member selected from the group consisting of triglycerides of saturated fatty acids each having 10, 12 or 14 carbon atoms; triglycerides of unsaturated fatty acids each having 18 carbon atoms; and triglycerides comprising, as constituent fatty acids components, at least two kinds of fatty acids, or at least a saturated fatty acid having 10, 12 or 14 carbon atoms and an unsaturated fatty acid having 18 carbon atoms.

3. An insecticidal and ovicidal composition comprising, as an effective component, at least one member selected from the group consisting of triglycerides each comprising a saturated fatty acid having 12 carbon atoms and a saturated fatty acid having 14 carbon atoms as the constituent fatty acids components [having a preferred molar mixing ratio ranging from (1 to 4): (1 to 4)]; triglycerides each comprising a saturated fatty acid having 12 carbon atoms and an unsaturated fatty acid having 18 carbon atoms as the constituent fatty acids components [having a preferred molar mixing ratio ranging from (1 to 4): (1 to 4)]; triglycerides each comprising a saturated fatty acid having 12 carbon atoms, a saturated fatty acid having 14 carbon atoms and an unsaturated fatty acid having 18 carbon atoms as the constituent fatty acids components [having a preferred molar mixing ratio ranging from (1 to 4): (1 to 4): (1 to 4)]; triglycerides each comprising a saturated fatty acid having 10 carbon atoms and an unsaturated fatty acid having 18 carbon atoms as the constituent fatty acids components [having a preferred molar mixing ratio ranging from (1 to 4): (1 to 4)]; glycerin trioleate; and glycerin trilaurate.

4. An insecticidal and ovicidal composition comprising, as an effective component, oils and fats selected from the group consisting of those in which the constituent fatty acid components thereof are occupied by a saturated fatty acid having 10 carbon atoms, a saturated fatty acid having 12 carbon atoms, a saturated fatty acid having 14 carbon atoms and an unsaturated fatty acid having 18 carbon atoms in a rate of not less than 20% by mass on the basis of the total mass of the constituent fatty acid components.

5. An insecticidal and ovicidal composition comprising, as an effective component, oils and fats whose constituent fatty acid components are occupied by lauric acid in a rate of not less than 20% by mass based on the total mass of the constituent fatty acid components.

6. An insecticidal and ovicidal composition comprising, as an effective component, oils and fats whose constituent fatty acid components are occupied by myristic acid in a rate of not less than 20% by mass based on the total mass of the constituent fatty acid components.

7. An insecticidal and ovicidal composition comprising, as an effective component, oils and fats whose constituent fatty acid components are occupied by oleic acid in a rate of not less than 20% by mass based on the total mass of the constituent fatty acid components.

8. The insecticidal and ovicidal composition as set forth in any one of the foregoing items 1 to 7, wherein the content of the effective component ranges from 0.01 to 20% by mass.

9. The insecticidal and ovicidal composition as set forth in any one of the foregoing items 1 to 7, wherein the content of the effective component ranges from 0.1 to 5% by mass.

10. The insecticidal and ovicidal composition as set forth in any one of the foregoing items 1 to 9, wherein it further comprises at least one auxiliary agent selected from the group consisting of diglycerin oleate, diglycerin laurate, propylene glycol monolaurate, propylene glycol monopalmitate and propylene glycol monooleate.

11. The insecticidal and ovicidal composition as set forth in any one of the foregoing items 1 to 10, wherein it further comprises at least one surfactant selected from the group consisting of polyglycerin polyricinoleates, polyoxyethylene styrylphenyl ethers, polyoxyethylene fatty acid esters, polyoxyethylene castor oil and dodecylbenzene sulfonate.

12. A method for killing or stamping out noxious insects or eggs thereof comprising the step of spraying farm products with an insecticidal and ovicidal composition as set forth in any one of the foregoing items 1 to 11 in an amount ranging from 0.2 kg/10 Ares to 8 kg/10 Ares.

13. The method for killing or stamping out noxious insects or eggs thereof as set forth in the foregoing item 12, wherein the insecticidal and ovicidal composition is sprayed on the farm products in an amount ranging from 0.5 kg/10 Ares to 3 kg/10 Ares.

Best Mode for Carrying Out the Invention

The present invention has been completed on the basis of such a finding that oils and fats having a specific fatty acid composition have excellent insecticidal and ovicidal effects on the eggs of insects harmful to farm products.

As effective components for the insecticidal and ovicidal composition of the present invention, there may be listed, for instance, coconut oil, palm kernel oil, triglycerides of saturated fatty acids each having 10, 12 or 14 carbon atoms; triglycerides of unsaturated fatty acids each having 18 carbon atoms; and triglycerides comprising, as the constituent fatty acid components, at least two kinds of fatty acids, or at least a saturated fatty acid having 10, 12 or 14 carbon atoms and an unsaturated fatty acid having 18 carbon atoms.

Specific examples thereof include capric acid for the saturated fatty acid having 10 carbon atoms, lauric acid for the saturated fatty acid having 12 carbon atoms and myristic acid for the saturated fatty acid having 14 carbon atoms, while specific example of unsaturated fatty acid having 18 carbon atoms include oleic acid.

Examples of triglycerides derived from saturated fatty acids having 12 carbon atoms include glycerin trilaurate; those of triglycerides derived from unsaturated fatty acids having 18 carbon atoms include glycerin trioleate; those of triglycerides comprising, as the constituent fatty acids components, at least two kinds of fatty acids, or at least a saturated fatty acid having 10, 12 or 14 carbon atoms and an unsaturated fatty acid having 18 carbon atoms include those comprising, as the constituent fatty acids components, a saturated fatty acid having 12 carbon atoms and a saturated fatty acid having 14 carbon atoms; those comprising, as the constituent fatty acids components, a saturated fatty acid having 12 carbon atoms and an unsaturated fatty acid having 18 carbon atoms; those comprising, as the constituent fatty acids components, a saturated fatty acid having 12 carbon atoms, a saturated fatty acid having 14 carbon atoms and an unsaturated fatty acid having 18 carbon atoms; those comprising, as the constituent fatty acids components, a saturated fatty acid having 10 carbon atoms and an unsaturated fatty acid having 18 carbon atoms; and mixtures each comprising at least two of these triglycerides.

In the insecticidal and ovicidal composition according to the present invention, the content of the foregoing effective component preferably ranges from 0.01 to 20% by mass and more preferably 0.1 to 5% by mass.

The insecticidal and ovicidal composition according to the present invention may be one simply comprising the foregoing oils and fats, but it is preferred that the composition further comprises at least one auxiliary agent selected from the group consisting of diglycerin oleates (from monooleate to hexaoleate, which may be used alone or in any combination), diglycerin laurates (from monolaurate to hexalaurate, which may be used alone or in any combination), propylene glycol monolaurate, propylene glycol monopalmitate and propylene glycol monooleate.

The content of these auxiliary agents preferably ranges from 5 to 70 parts by mass and more preferably 20 to 50 parts by mass per 100 parts by mass of the oils and fats as the effective component.

The insecticidal and ovicidal composition according to the present invention may further comprise at least one surfactant selected from the group consisting of polyglycerin polyricinoleates, polyoxyethylene styrylphenyl ethers, polyoxyethylene fatty acid esters, polyoxyethylene castor oil and dodecylbenzene sulfonate.

The content of the surfactant preferably ranges from 5 to 70 parts by mass and more preferably 5 to 20 parts by mass per 100 parts by mass of the oils and fats as the effective component.

The insecticidal and ovicidal composition according to the present invention preferably comprises the oils and fats as the effective components and the foregoing auxiliary agent and more preferably the composition further comprises the foregoing surfactant.

The insecticidal and ovicidal composition according to the present invention is desirably sprayed on farm products in an amount preferably ranging from 0.2 kg/10 Ares to 8 kg/10 Ares and more preferably 0.5 kg/10 Ares to 3 kg/10 Ares.

When spraying the foregoing insecticidal and ovicidal composition, the composition is preferably diluted with, for instance, water such that the amount of the effective component or the oils and fats preferably falls within the range of from 0.05 to 5% by mass and more preferably 0.2 to 0.5% by mass, prior to the application thereof.

The appropriate time to spray the composition on farm products may vary depending on the kinds of noxious insects, but the composition can in general be sprayed from the initial stage of the ovipositing period to the final stage thereof. It would be effective to spray the composition at the earlier ovipositing period, but the composition of the present invention shows a higher ovicidal effect and for this reason, it is likewise effective to spray the composition on farm products even after the confirmation of the oviposition.

The insecticidal and ovicidal composition according to the present invention is effective for killing and/or stamping out any sorts of insects harmful to farm products and larvae thereof, but the following are noxious insects to be killed or stamped out by the composition of the present invention:

· Insects belonging to the order of Lepidoptera: Mamestra brassicae, Leucania separata, Plutella maculipennis;
· Spider mites: Panonychus citri, Tetranychus urticae, Tetranychus kanzawai;
· Gall mites: Aculus pelekassi, Aculops lycopersici;
· Tarsonemid mites: Brevipalpus obovatus;
· Dust mites: Tyrophagus similes;
· Aphids: Aphis gossyppi, Myzus persicae, Aulacorthum solani;
· Insects belonging to the order of Hemiptera: Trialeurodes vaporariorus, Bemisia tabaci;
Scale insects: Icerya purchasi, Unaspis yanonensis, Ceroplastes pseudoceriferus.

The following are noxious insects on which the insecticidal and ovicidal composition of the present invention has a significant ovicidal effect: Insects belonging to the order of Lepidoptera; spider mites; gall mites; tarsonemid mites; dust mites; and aphids.

Then test methods will hereunder be described in detail, which are required for confirming the ovicidal effect of the composition on a various kinds of noxious insects:

1. Effect of the Composition on the Eggs of Tetranychus kanzawai
Imagines of Tetranychus karizawai were released on the seedlings of a kidney bean, the imagines were kept thereon over 3 days and removed after the oviposition of the same, and then a sample drug solution diluted to a desired concentration was sprayed on the seedlings. Thereafter, the seedlings were kept in a greenhouse of glass and then the number of surviving individuals of Tetranychus kanzawai was counted after the elapse of 14 days.

2. Effect of the Composition on Aculops lycopersici
A sample solution diluted to a desired concentration was sprayed on the seedlings of a tomato which had suffered from injuries inflicted by Aculops lycopersici. Thereafter, the seedlings were kept in a greenhouse of glass and then the newly grown buds were inspected for the degree of injuries. In this respect, if the sample drug has a noxious insect-controlling effect, the newly grown buds never suffer from any injury inflicted by the insect. In this test, the insects have already laid eggs on the injured seedlings of tomato. Therefore, the sample drug was judged to have a desired ovicidal effect when the test was conducted under the foregoing conditions and there was not observed the occurrence of any further damage after the application of the sample drug solution.

3. Effect of the Composition on Brevipalpus obovatus

A sample solution diluted to a desired concentration was sprayed on the seedlings of an egg plant which had suffered from injuries inflicted by Brevipalpus obovatus. Thereafter, the seedlings were kept in a greenhouse of glass and then the newly grown buds were inspected for the degree of injuries.

4. Effect of the Composition on Trialeurodes vaporariorus

Effect on Eggs

The imagines of Trialeurodes vaporariorus were released on the leaves of a cucumber, the imagines were kept thereon for 2 days and removed after the oviposition of the same, and then a sample drug solution diluted to a desired concentration was sprayed on the leaves. Thereafter, the cucumber and leaves of the same were kept in a greenhouse of glass and then the number of the surviving larvae of Trialeurodes vaporariorus was counted after the elapse of 14 days.

Effect on Larvae

A sample drug solution diluted to a desired concentration was sprayed on the leaves of a cucumber, on which the 3 to 4-stage larvae of Trialeurodes vaporariorus were living. Thereafter, the cucumber and leaves of the same were kept in a greenhouse of glass and then the leaves were observed by a microscope after 4 days to thus confirm whether the larvae thereof were surviving or not and the number of the surviving larvae thereof was counted.

5. Effect of the Composition on Aphis gossyppi

A sample drug solution diluted to a desired concentration was sprayed on the back of true leaves of a cucumber, on which the imagines of Aphis gossyppi were living. Thereafter, the true leaves of the cucumber were kept in a greenhouse of glass and then the true leaves were observed after 4 days to thus confirm whether the imagines thereof were surviving or not and the number of the surviving imagines thereof was counted.

6. Effect of the Composition on Unaspis yanonensis

A sample drug solution diluted to a desired concentration was sprayed on the leaves of a citrus fruit plant, on which the imagines of Unaspis yanonensis were living. Thereafter, the plant including these leaves was kept in a greenhouse of glass and then the leaves were observed by a microscope after 4 days to thus confirm whether the larvae of Unaspis yanonensis were surviving or not and the number of the surviving larvae thereof was counted.

7. Effect of the Composition on Mamestra brassicae

The eggs of Mamestra brassicae laid on drug-packing paper were used in this test. An egg-mass thereof was cut into 4 to 5 pieces, one of them was not subjected to any treatment, while the remaining pieces were used in the test for the confirmation of the effect.

The egg-mass was immersed in a sample drug solution diluted to a desired concentration for about 30 seconds together with the drug-packing paper. The egg-mass was put on filter paper to thus sufficiently remove the moisture present therein and then it was introduced into a laboratory dish to cultivate the same at 25°C and the number of the surviving larvae thereof was calculated after 7 days.

8. Effect of the Composition on Plutella maculipennis

The whole of a head of Pakuchoi (Qing gin cai) was introduced into a beaker filled with water, the beaker was maintained in a cage in which the imagines of Plutella maculipennis had been released to allow the imagines to oviposit eggs over 4 hours, and then a sample drug solution diluted to a desired concentration was sprayed on the head of Qing gin cai. The sample drug solution sprayed on the head of the vegetable was sufficiently dried in a room, the head of the vegetable was introduced into a plastic container, and the eggs of the insect were cultivated while the humidity within the container was maintained at such a level that the Qing gin cai did not cause any droop. After 2 days, the number of eating marks was counted. More specifically, it would be quite difficult to observe the hatching of the eggs of the insect and accordingly, the number of hatched larvae was assumed to be identical to the number of eating marks observed and the latter was divided by the number of eggs to thus determine the hatching rate.

9. Effect of the Composition on Leucania separata

The eggs of Leucania separata laid on paraffin paper were used in this test. The paraffin paper was cut into pieces in such a manner that each piece included about 100 to 120 eggs of the noxious insect and then each piece was immersed in a sample drug solution diluted to a desired concentration for about 30 seconds. The excess moisture was removed from the piece using filter paper, the piece was further sufficiently dried and then introduced into a laboratory dish to thus cultivate the eggs. The number of larvae was counted after 10 days.

Each effect can be determined according to the following method:

Rate of Killing Eggs (Ovicidal Rate) (%) of Tetranychus urticae

$$\text{Ovicidal Rate (\%)} = 100 \times \text{(Number of Spider mites observed for Treated Group)/(Number of Spider mites observed for Non-treated Group)}$$

Control Effect (%) on Aculops lycopersici. Brevipalpus obovatus
The newly grown buds of each test plant were inspected for the degree of damages, which were ranked according to the following criteria:

◎: The buds were not damaged at all;

○: The buds were quite slightly damaged;

△: There were observed damages or injured areas; and

✕ : The buds were severely damaged.

$$\text{Deg. of Damage} = (n1◎ \times 0 + n2○ \times 1 + n3△ \times 3 + n4 \times 5)/5N$$

In the equation, each of n1, n2, n3 and n4 represents the number of buds ascribed to each corresponding criterion and N represents the total number of buds examined.

$$\text{Control Effect (\%)} = \text{(Deg. of Damage observed for Non-Treated Group)/(Deg. of Damage observed for Treated Group)}$$

Ovicidal Rate (%) Observed for Trialeurodes vaporariorus

$$\text{Ovicidal Rate (\%)} = 100 \times \text{(Number of Unhatched Eggs)/(Total Number of Eggs)}$$

$$\text{Larvae-Killing Rate (\%)} = 100 \times \text{(Number of Killed Larvae)/(Total Number of Larvae)}$$

Rate of Killing Insect (Insecticidal Rate) (%) Observed for Aphis gossyppi

$$\text{Insecticidal Rate (\%)} = 100 \times \text{(Number of Killed Larvae)/(Total Number of Larvae)}$$

Rate of Killing Insect (Insecticidal Rate) (%) Observed for Unaspis yanonensis

$$\text{Insecticidal Rate (\%)} = 100 \times \text{(Number of Killed Larvae)/(Total Number of Larvae)}$$

Hatching Rate (%) of Mamestra brassicae

$$\text{Hatching Rate (\%)} = \text{(Number of Hatched Eggs)/(Total Number of Eggs)}$$

Hatching Rate (%) of Plutella maculipennis

$$\text{Hatching Rate (\%)} = 100 \times \text{(Number of Eating Marks Observed for Treated Group)/(Number of Eating Marks Observed for Non-Treated Group)}$$

Hatching Rate (%) and Larvae-Killing (Larvicidal) Rate (%) Observed for Leucania separata

$$\text{Hatching Rate (\%)} = 100 \times \text{(Number of Hatched Eggs)/(Total Number of Eggs)}$$

$$\text{Larvicidal Rate (\%)} = 100 \times \text{(Number of Larvae Observed for Treated Group)/(Number of Larvae Observed for Non-Treated Group)}$$

The present invention will hereunder be described in more detail with reference to the following Examples and Test Examples.

The components used in the following Examples and Comparative Examples are as follows:

Sorpol CA-42: Polyoxyethylene (40) castor oil;
Sorpol 355H: Mixture of Sorpol T-20, Sorpol T-26, Sorpol EX-15 and an alkyl benzene;
Sorpol T-20: Polyoxyethylene styrylphenyl ether (HLB 13.3);
Sorpol T-26: Polyoxyethylene styrylphenyl ether (HLB 14.4);
Sorpol EX-15: Calcium alkyl allyl sulfonate;
Alkyl benzene;
Liquemal B205: Polyoxyethylene lauryl ether;
Liquemal DO-100: Diglycerin monooleate;
Liquemal L-71-D: Diglycerin laurate (including from monolaurate to hexalaurate, which may be used alone or in any combination);
Liquemal O-71-D: Diglycerin oleate (including from monooleate to hexaoleate, which may be used alone or in any combination);
Acter M-1: Tricaprylin (70% by mass)/tricaprin (30% by mass);
Acter M-2: Tricaprylin;
Pegnol 14-O: Polyoxyethylene oleyl ester;
Phosphanol ML-200: Lauryl phosphate;
AG-7520: Polyglycerin oleate (available from Riken Vitamin Co., Ltd.);
Auxiliary agent A: Sorpol 355H + Liquemal DO-100 + soybean oil;

Auxiliary agent B: Liquemal B205 + Liquemal O-71-D + M-2
Auxiliary agent C: Sorpol 355H + soybean oil + AG-7520;
Auxiliary agent D: Liquemal B205 + Liquemal 0-71-D + olive oil;
Auxiliary agent E: Liquemal DO-100 + soybean oil;
Auxiliary agent F: Liquemal DO-100 + olive oil.

Sorpol is the trade name of a product manufactured and sold by Toho Chemical Industry and "Liquemal" and "Acter" are trade names of products manufactured and sold by Riken Vitamin Co., Ltd.

Example 1

Coconut oil was admixed with Sorpol 355H in a mixing ratio of 9:1 to thus give an agricultural preparation.

Example 2

Palm kernel oil was admixed with Liquemal B205 in a mixing ratio of 9:1 to thus give an agricultural preparation.

Example 3

Coconut oil was admixed with the auxiliary agent A (a product obtained by admixing Acter M-1, Sorpol 355H and Liquemal DO-100 in a mixing ratio of 1:1:1) in a mixing ratio of 8:2 to thus form an agricultural preparation.

Example 4

Coconut oil was admixed with the auxiliary agent B (a product obtained by admixing Acter M-2, Liquemal B205 and Liquemal O-71-D in a mixing ratio of 1:1:1) in a mixing ratio of 8:2 to thus form an agricultural preparation.

Example 5

Palm kernel oil was admixed with the auxiliary agent C (a product obtained by admixing soybean oil, Sorpol 355H and AG-7520 in a mixing ratio of 1:1:1) in a mixing ratio of 8:2 to thus form an agricultural preparation.

Example 6

Glycerin trioleate was admixed with the auxiliary agent E (a product obtained by admixing Liquemal DO-100 and soybean oil in a mixing ratio of 1:1) in a mixing ratio of 8:2 to thus form an agricultural preparation.

Example 7

Glycerin trilaurate was admixed with the auxiliary agent F (a product obtained by admixing Liquemal DO-100 and olive oil in a mixing ratio of 1:1) in a mixing ratio of 1:9 to thus form an agricultural preparation.

Example 8

A triglyceride, which comprised a saturated fatty acid having 12 carbon atoms (lauric acid) and an unsaturated fatty acid having 18 carbon atoms (oleic acid) in a mixing ratio of 1:1, was admixed with the auxiliary agent E (a product obtained by admixing Liquemal DO-100 with soybean oil in a mixing ratio of 1:1) in a mixing ratio of 8:2 to thus form an agricultural preparation.

Example 9

A triglyceride, which comprised a saturated fatty acid having 12 carbon atoms (lauric acid), a saturated fatty acid having 14 carbon atoms (myristic acid) and an unsaturated fatty acid having 18 carbon atoms (oleic acid) in a mixing ratio of 1:1:1, was admixed with the auxiliary agent E (a product obtained by admixing Liquemal DO-100 with soybean oil in a mixing ratio of 1:1) in a mixing ratio of 8:2 to thus form an agricultural preparation.

Example 10

A triglyceride, which comprised a saturated fatty acid having 10 carbon atoms (capric acid) and an unsaturated fatty acid having 18 carbon atoms (oleic acid) in a mixing ratio of 1:1, was admixed with the auxiliary agent E (a product obtained by admixing Liquemal DO-100 with soybean oil in a mixing ratio of 1:1) in a mixing ratio of 8:2 to thus form an agricultural preparation.

Example 11

A triglyceride, which comprised a saturated fatty acid having 12 carbon atoms (lauric acid) and a saturated fatty acid having 14 carbon atoms (myristic acid) in a mixing ratio of 2:1, was admixed with the auxiliary agent A (a product obtained by admixing Sorpol 355H, Liquemal DO-100 and soybean oil in a mixing ratio of 1:1:1) in a mixing ratio of 1:1 to thus form an agricultural preparation.

Comparative Example 1

Soybean oil was admixed with Sorpol 355H in a mixing ratio of 9:1 to thus form an agricultural preparation.

Comparative Example 2

Palm oil was admixed with Liquemal B205 in a mixing ratio of 9:1 to thus form an agricultural preparation.

Comparative Example 3

Rape seed oil was admixed with the auxiliary agent A (a product obtained by admixing soybean oil, Sorpol 355H and Liquemal DO-100 in a mixing ratio of 1:1:1) in a mixing ratio of 8:2 to thus form an agricultural preparation.

Comparative Example 4

Sunflower oil was admixed with the D composition (a product obtained by admixing Acter M-1, Liquemal B205 and Liquemal O-71-D (available from Riken Vitamin Co., Ltd.) in a mixing ratio of 1:1:1) in a mixing ratio of 8:2 to thus form an agricultural preparation.

Comparative Example 5

Olive oil was admixed with the auxiliary agent C (a product obtained by admixing soybean oil, Sorpol 355H and AG-7520 in a mixing ratio of 1:1:1) in a mixing ratio of 8:2 to thus form an agricultural preparation.

Test Example 1

Various kinds of agricultural preparations prepared above were inspected for the ovicidal effects on the eggs of noxious insects belonging to the order of Lepidoptera. The results thus obtained are summarized in the following Table 1:

Table 1

| Sample (Ex. No.) | Conc. (mg/ 100mL) | Hatching Rate (%) | | |
|---|---|---|---|---|
| | | Mamestra brassicae | Leucania separata | Plutella maculipennis |
| 1 | 300 | 6 | 11 | 11 |
| 2 | 300 | 12 | 14 | 16 |
| 3 | 300 | 0 | 1 | 0 |
| 4 | 300 | 2 | 0 | 1 |
| 5 | 300 | 1 | 2 | 1 |
| 6 | 300 | 5 | 3 | 0 |
| 7 | 300 | 0 | 0 | 0 |

Table continued

| Sample (Ex. No.) | Conc. (mg/ 100mL) | Hatching Rate (%) | | |
|---|---|---|---|---|
| | | Mamestra brassicae | Leucania separata | Plutella maculipennis |
| 8 | 300 | 0 | 1 | 0 |
| 9 | 300 | 3 | 5 | 4 |
| 10 | 300 | 6 | 8 | 2 |
| 1* | 300 | 66 | 72 | 67 |
| 2* | 300 | 71 | 74 | 62 |
| 3* | 300 | 74 | 79 | 71 |
| 4* | 300 | 82 | 83 | 68 |
| 5* | 300 | 88 | 82 | 73 |
| No treatment | -- | 85 | 87 | 83 |
| *: Comparative Example | | | | |

Test Example 2

A variety of agricultural preparations prepared above were inspected for the ovicidal effects on the eggs of various kinds of mites and the mite-control effect (effect of preventing the breeding and extermination of mites). The results thus obtained are summarized in the following Table 2:

Table 2

| Sample (Ex. No.) | Conc. (mg/100 mL) | Ovicidal Rate (%) | Control Effect (%) | |
|---|---|---|---|---|
| | | Tetranychus urticae | Aculops lycopersici | Brevipalpus obovatus |
| 1 | 300 | 83 | 76 | 81 |
| 2 | 300 | 77 | 82 | 84 |
| 3 | 300 | 98 | 96 | 99 |
| 4 | 300 | 100 | 100 | 100 |
| 5 | 300 | 100 | 100 | 100 |
| 6 | 300 | 92 | 83 | 75 |
| 7 | 300 | 100 | 100 | 100 |
| 8 | 300 | 100 | 99 | 100 |
| 9 | 300 | 92 | 88 | 81 |
| 10 | 300 | 93 | 85 | 88 |
| 11 | 300 | 95 | -- | -- |
| 1* | 300 | 21 | 8 | 6 |
| 2* | 300 | 25 | 9 | 4 |
| 3* | 300 | 28 | 10 | 9 |
| 4* | 300 | 31 | 15 | 14 |
| 5* | 300 | 33 | 16 | 21 |
| No treatment | -- | 0 | 0 | 0 |
| *: Comparative Example | | | | |

Test Example 3

A variety of agricultural preparations prepared above were inspected for the effect of controlling the breeding and extermination of noxious insects. The results thus obtained are summarized in the following Table 3:

Table 3

| Sample (Ex. No.) | Control Effect (%) | | | |
|---|---|---|---|---|
| | Trialeurodes vaporariorus | | Aphis gossyppi | Icexya purchasi |
| | Larva | Egg | | |
| 1 | 78 | 45 | 84 | 76 |
| 2 | 81 | 38 | 77 | 74 |
| 3 | 92 | 67 | 91 | 94 |
| 4 | 100 | 71 | 100 | 100 |
| 5 | 100 | 69 | 100 | 100 |
| 1* | 12 | 5 | 21 | 5 |
| 2* | 9 | 0 | 22 | 8 |
| 3* | 9 | 3 | 28 | 10 |
| 4* | 14 | 12 | 32 | 18 |
| 5* | 16 | 18 | 21 | 22 |
| No treatment | 0 | 0 | 0 | 0 |
| *: Comparative Example | | | | |

The concentration of the drug solution was set at 300 mg/100 mL.

Test Example 4

A variety of agricultural preparations prepared above were inspected for the effect of killing eggs of noxious insects belonging to the order of Lepidoptera. The results thus obtained are summarized in the following Table 4:

Table 4

| Sample | Conc. (mg/ 100mL) | Hatching Rate (%) | | |
|---|---|---|---|---|
| | | Mamestra brassicae | Leucania separata | Plutella maculipennis |
| Preparation of Ex. 4 | 300 | 2 | 0 | 1 |
| Auxiliary agent A | 300 | 63 | 62 | 65 |
| Auxiliary agent B | 300 | 66 | 64 | 61 |
| Auxiliary agent C | 300 | 62 | 63 | 58 |
| Auxiliary agent D | 300 | 74 | 73 | 74 |
| Auxiliary agent E | 300 | 71 | 73 | 69 |
| Sorpol T-20 | 300 | 68 | 70 | 77 |
| Liquemal B205 | 300 | 76 | 74 | 78 |
| Sorpol CA-42 | 300 | 77 | 76 | 73 |
| Pegnol 14-O | 300 | 70 | 74 | 71 |
| Phosphanol ML-200 | 300 | 77 | 75 | 68 |

Test Example 5

A variety of agricultural preparations prepared above were inspected for the ovicidal effect and the control effect on mites. The results thus obtained are summarized in the following Table 5:

Table 5

| Sample | Conc. (mg/100 mL) | Ovicidal Rate (%) | Control Effect (%) | |
|---|---|---|---|---|
| | | Tetranychus urticae | Aculops lycopersici | Brevipalpus obovatus |
| Preparation of Ex. 4 | 300 | 100 | 100 | 100 |
| Auxiliary agent A | 300 | 8 | 12 | 9 |
| Auxiliary agent B | 300 | 0 | 11 | 10 |
| Auxiliary agent C | 300 | 4 | 3 | 6 |
| Auxiliary agent D | 300 | 12 | 10 | 10 |
| Auxiliary agent E | 300 | 10 | 13 | 8 |
| Sorpol T-20 | 300 | 6 | 10 | 5 |
| Liquemal B205 | 300 | 7 | 6 | 3 |
| Sorpol CA-42 | 300 | 4 | 0 | 2 |
| Pegnol 14-O | 300 | 3 | 1 | 4 |
| Phosphanol ML-200 | 300 | 0 | 5 | 1 |

Test Example 6

A variety of agricultural preparations prepared above were inspected for the control effect on noxious insects. The results thus obtained are summarized in the following Table 6:

Table 6

| Sample | Control Effect (%) | | Aphis gossyppi | Icerya purchasi |
|---|---|---|---|---|
| | Trialeurodes vaporariorus | | | |
| | Larva | Egg | | |
| Preparation of Ex. 4 | 100 | 71 | 100 | 100 |
| Auxiliary agent A | 3 | 0 | 2 | 5 |
| Auxiliary agent B | 1 | 0 | 3 | 2 |
| Auxiliary agent C | 2 | 0 | 2 | 1 |
| Auxiliary agent D | 4 | 0 | 2 | 3 |
| Auxiliary agent E | 3 | 0 | 1 | 1 |
| Sorpol T-20 | 0 | 0 | 0 | 0 |
| Liquemal B205 | 0 | 0 | 1 | 1 |
| Sorpol CA-42 | 1 | 0 | 4 | 2 |
| Pegnol 14-O | 0 | 0 | 2 | 1 |
| Phosphanol ML-200 | 0 | 0 | 0 | 0 |

Industrial Applicability

The conventional insecticidal compositions are used for stamping out the imagines and/or larvae of insects harmful to farm products and they can never reduce or inhibit the hatching ability of the eggs of noxious insects, while the insecticidal and ovicidal composition of the present invention not only has an ability of killing insects, but also shows an ovicidal effect. Accordingly, the latter can not only exterminate the imagines and/or larvae of insects harmful to farm products, but also reduce or inhibit the hatching ability of the eggs of noxious insects, which have already been deposited on or blown into crops or soil. Thus, the composition of the present invention can effectively prevent or reduce any insect damage of farm products.

**Claims**

1. An insecticidal and ovicidal composition comprising, as an effective component, at least one member selected from the group consisting of coconut oil and palm kernel oil.

2. An insecticidal and ovicidal composition comprising, as an effective component, at least one member selected from the group consisting of triglycerides of saturated fatty acids each having 10, 12 or 14 carbon atoms; triglycerides of unsaturated fatty acids each having 18 carbon atoms; and triglycerides comprising, as the constituent fatty acids components, at least two kinds of fatty acids, or at least a saturated fatty acid having 10, 12 or 14 carbon atoms and an unsaturated fatty acid having 18 carbon atoms.

3. An insecticidal and ovicidal composition comprising, as an effective component, at least one member selected from the group consisting of triglycerides each comprising a saturated fatty acid having 12 carbon atoms and a saturated fatty acid having 14 carbon atoms as the constituent fatty acids components; triglycerides each comprising a saturated fatty acid having 12 carbon atoms and an unsaturated fatty acid having 18 carbon atoms as the constituent fatty acids components; triglycerides each comprising a saturated fatty acid having 12 carbon atoms, a saturated fatty acid having 14 carbon atoms and an unsaturated fatty acid having 18 carbon atoms as the constituent fatty acids components; triglycerides each comprising a saturated fatty acid having 10 carbon atoms and an unsaturated fatty acid having 18 carbon atoms as the constituent fatty acids components; glycerin trioleate; and glycerin trilaurate.

4. An insecticidal and ovicidal composition comprising, as an effective component, oils and fats selected from the group consisting of those in which the constituent fatty acid components thereof are occupied by a saturated fatty acid having 10 carbon atoms, a saturated fatty acid having 12 carbon atoms, a saturated fatty acid having 14 carbon atoms and an unsaturated fatty acid having 18 carbon atoms in a rate of not less than 20% by mass on the basis of the total mass of the constituent fatty acid components.

5. An insecticidal and ovicidal composition comprising, as an effective component, oils and fats whose constituent fatty acid components are occupied by lauric acid in a rate of not less than 20% by mass based on the total mass of the constituent fatty acid components.

6. An insecticidal and ovicidal composition comprising, as an effective component, oils and fats whose constituent fatty acid components are occupied by myristic acid in a rate of not less than 20% by mass based on the total mass of the constituent fatty acid components.

7. An insecticidal and ovicidal composition comprising, as an effective component, oils and fats whose constituent fatty acid components are occupied by oleic acid in a rate of not less than 20% by mass based on the total mass of the constituent fatty acid components.

8. The insecticidal and ovicidal composition as set forth in any one of claims 1 to 7, wherein the content of the effective component ranges from 0.01 to 20% by mass.

9. The insecticidal and ovicidal composition as set forth in any one of claims 1 to 7, wherein the content of the effective component ranges from 0.1 to 5% by mass.

10. The insecticidal and ovicidal composition as set forth in any one of claims 1 to 9, wherein it further comprises at least one auxiliary agent selected from the group consisting of diglycerin oleate, diglycerin laurate, propylene glycol monolaurate, propylene glycol monopalmitate and propylene glycol monooleate.

11. The insecticidal and ovicidal composition as set forth in any one of claims 1 to 10, wherein it further comprises at least one surfactant selected from the group consisting of polyglycerin polyricinoleates, polyoxyethylene styrylphenyl ethers, polyoxyethylene fatty acid esters, polyoxyethylene castor oil and dodecylbenzene sulfonate.

12. A method for killing or stamping out noxious insects or eggs thereof comprising the step of spraying farm products with an insecticidal and ovicidal composition as set forth in any one of claims 1 to 11 in an amount ranging from 0.2 kg/10 Ares to 8 kg/10 Ares.

13. The method for killing or stamping out noxious insects or eggs thereof as set forth in claim 12, wherein the insecticidal and ovicidal composition is sprayed on the farm products in an amount ranging from 0.5 kg/10 Ares to 3 kg/10 Ares.

## INTERNATIONAL SEARCH REPORT

International application No.

PCT/JP2004/009802

A. CLASSIFICATION OF SUBJECT MATTER
Int.Cl⁷ A01N37/02, 37/06

According to International Patent Classification (IPC) or to both national classification and IPC

B. FIELDS SEARCHED

Minimum documentation searched (classification system followed by classification symbols)
Int.Cl⁷ A01N37/02, 37/06

Documentation searched other than minimum documentation to the extent that such documents are included in the fields searched

Electronic data base consulted during the international search (name of data base and, where practicable, search terms used)
CA(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 11-29411 A (Sankei Kagaku Kabushiki Kaisha),<br>02 February, 1999 (02.02.99),<br>Full text<br>(Family: none) | 2,4,8-13<br>1,3,5-7 |
| X<br>A | JP 10-251104 A (The Institute of Physical and Chemical Research),<br>22 September, 1998 (22.09.98),<br>Full text<br>& EP 862861 A1    & US 6294578 B | 2,4,7-13<br>1,3,5,6 |

☐ Further documents are listed in the continuation of Box C.   ☐ See patent family annex.

| * Special categories of cited documents: | | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>22 July, 2004 (22.07.04) | Date of mailing of the international search report<br>10 August, 2004 (10.08.04) |
|---|---|
| Name and mailing address of the ISA/<br>Japanese Patent Office | Authorized officer |
| Facsimile No. | Telephone No. |

Form PCT/ISA/210 (second sheet) (January 2004)

| INTERNATIONAL SEARCH REPORT | International application No. |
|---|---|
| | PCT/JP2004/009802 |

(Subject of international search)
   (1) Clarity of claims
   What particular fatty acids are constituent fatty acids of the "triglycerides" of claim 3, etc. is not clear from the description of claim 3, etc. Since "triglycerides having ovicidal activity as well" have not been known by persons skilled in the art to which the invention pertains, the particular fatty acid compositions constituting the triglycerides do not belong to technical common knowledge of persons skilled in the art to which the invention pertains. Moreover even when the contents of the description are taken into account, there is no clear definition with respect to the scope of particular fatty acid compositions in the description.
   Therefore, the invention (concept of) claims 3-13 is not clear.

   (2) Sufficient support of claims by description
   Triglycerides indicated in the description as having ovicidal activity among those of claim 3, etc. are only triglycerides whose constituent fatty acid is a $C_{10}$, $C_{12}$ or $C_{14}$ saturated fatty acid or $C_{18}$ unsaturated fatty acid. Any other triglycerides (for example, "those wherein 80% of the constituent fatty acids are short-chain fatty acids", " those wherein 80% of the constituent fatty acids are long-chain fatty acids", "those containing a $C_{11}$ or $C_{13}$ fatty acid as the constituent fatty acid", etc.) are not specifically disclosed at all.
   Further, the ovicidal activity of triglycerides does not belong to technical common knowledge of persons skilled in the art to which the invention pertains.
   Still further, chemical substances capable of being taken in ova and capable of interfering with ovular physiological functions are generally restricted to those of specified chemical structure, size, functional group, properties, etc.
   From the above viewpoint, it cannot be presumed that the triglycerides not particularly disclosed in the description have the same ovicidal activity as exhibited by the triglycerides particularly disclosed in the description.

   (3) Subject of international search
   Claims 3-13 of this international application are not clear and are not satisfactorily supported by the description, so that it is not possible to appropriately consider relevance to prior art with respect to all the claims 3 to 13.
   Therefore, the international search on the claims 3 to 13 has been restricted to "insecticidal ovicidal compositions comprising triglycerides whose constituent fatty acid is a $C_{10}$, $C_{12}$ or $C_{14}$ saturated fatty acid or $C_{18}$ unsaturated fatty acid".

Form PCT/ISA/210 (extra sheet) (January 2004)

16